# EUROPEAN PATENT APPLICATION

(11) **EP 2 247 041 A1**
(43) Date of publication of application: **03.11.2010**
(21) Application number: 09305361.9
(22) Date of filing: 28.04.2009
(51) Int. Cl.: H04L 12/56

(54) **Method of controlling admission of traffic flows**

(71) Applicant: Alcatel Lucent, 75008 Paris (FR)
(72) Inventor: Popa, Daniel, 92240, MALAKOFF (FR); Noirie, Ludovic, 91620, NOZAY (FR)
(74) Representative: Hervouet, Sylvie

(57) **Abstract**

A method of controlling admission of traffic flows, in a data packet communication network, comprising the steps of:
- determining if allocating an initial minimum given bandwidth amount Bₘ to a new traffic flow is possible without altering service quality of already existing traffic flows, if yes
- allocating said minimum given bandwidth amount Bₘ, and
- carrying said new traffic flow (3) across the network, further comprising the iterative steps, according to needs of said new traffic flow (3), of:
- determining if allocating an incremental given bandwidth amount B_{Δ} is possible as a function of a state of the network, if yes
- allocating said incremental given bandwidth amount B_{Δ},
and
- carrying said new traffic flow (3) across the network.

## Description

The technical domain of the invention is the domain of communication networks, and particularly the admission control in a packet network.

More particularly, the invention concerns a method that gradually admits a new flow.

Among the mechanisms required by a network to provide Quality of Service, QoS, to end-users, a flow admission control plays an important role. The main functionality of an admission control mechanism is to limit the amount of resource consumed in order to prevent congestion and therefore increase the network global performance.

As the statistical resource sharing and QoS provisioning are contradictory, admission control schemes primarily focus on optimizing the matching between traffic flow requirements and the state of network resources. The aim of admission control schemes is to manage the resource competition. This requires an as accurate as possible knowledge of traffic characteristics and of state of network resources.

An efficient admission control mechanism generally requires, at the time a new flow arrives at the border of the network, accurate knowledge of the characteristics of said new incoming flow and accurate knowledge of the state of network resources.

*The state of network resources* can be evaluated using either hop-by-hop signaling techniques between the entry node or ingress router and the exit node or egress router of each new incoming traffic flow or using measurement-based techniques. Hop-by-hop signaling between the ingress and egress routers requires that each intermediate node/router maintains tables with per-flow information. As the size of such tables linearly increases as a function of the number of admitted flows, such solution is not scalable. In addition, the latency of the decision is a function of the round-trip time between the ingress and egress routers.

By contrast to hop-by-hop signaling, measurement-based solutions can estimate, with a certain degree of accuracy, the state of the network resources and avoid hop-by-hop signaling for each new incoming traffic flow.

*Traffic flow characteristics* can be declared by the end-user, i.e., explicitly signaling some traffic descriptors, or can be measured at the entry node of the network, using traffic analysis/measurement techniques. Explicit signaling between end-user and the network requires *a priori* specification of traffic characteristics. Since it is difficult for the end-user to a priori and accurately describe its traffic flow, conventional admission control schemes use peak-rate allocation instead. This may lead to inefficient statistical multiplexing and thus bandwidth waste. By contrast to end-user traffic specification, measurement-based approaches can efficiently derive the real traffic flow characteristics at the expense of some additional complexity.

The major part of the prior art has focused on designing admission control mechanisms which use explicit signaling between users and the network and hop-by-hop signaling. These admission control mechanisms, as implemented in Frame Relay, ATM, SDH/SONET, and recently IP, require end-to-end signaling for each new flow before taking the decision of accepting or rejecting it.

As previously explained, such solution is not scalable when the number of flow increases. In addition, the time needed to take the decision, e.g. Round Trip Time or RTT, can be larger than the life-time of the flow. Therefore, such solutions are efficient only when the life-time of the flow is larger than the RTT.

As described in S. Oueslati and J. Roberts, "A New Direction for Quality of Service: Flow-Aware Networking", Proc. Conf. on Next Generation Internet Networks (NGI '05) (Rome, It., 2005), pp. 226-232, a recent scheme, the so-called Cross-Protect, proposes an implicit, and distributed, admission control scheme where each network node takes independent decision concerning accepting or rejecting a new flow. Such schemes have an important drawback: as nodes are not aware of the state of network resources between the entry and the exit point of the flow, a node can accept a flow that might be rejected at the next hop. When this happens network resources are wasted. In addition, as each ingress node takes independent decisions, the congestion can occurs in the core of the network at the nodes where the flows, coming from different ingress nodes, are merged.

Recently, measurement-based admission control, or MBAC, schemes received most of attention. Such schemes measure the state of network resources before taking the decision of accepting or rejecting a flow. Measurements schemes can either use probe packets or active measurements in each node of the network to derive the state of the network resources.
1) MBAC mechanisms based on probe packets have a number of important drawbacks. First, such schemes measure the RTT between a source, e.g. end-user or ingress node, and a destination, e.g. end-user or egress node, and derive from the RTT value the state of the network resources, i.e., the level of congestion. Such mechanisms cannot guarantee that all the probe packets will take the same path for the round-trip, the value of RTT can be biased when probe packets takes different return-path. Next, when several nodes effectuate a probe of the network to the same destination, the probe packets can synchronize. As a result, the congestion can occur at the destination. Finally, the network has to be probed for a certain period of time before taking the decision of accepting or rejecting a new flow. The longer the period of probing is, the better the accuracy in estimating the state of the network resources is. The length of the probing period is a key parameter for the efficiency of the admission control mechanisms and the choice of its length is not an easy task.
2) MBAC mechanisms based on active measurements of the state of network resources gain more and more attention thanks to the possibility of implementing packet analysis/measurement functionalities at the full rate of switching system line-cards. The main challenge of this approach is related to the broadcast of the information generated by each node to the appropriate partners.

The person skilled in the art would appreciate that the decision latency of prior art admission control schemes can be sometimes larger than the flow life-time. This is true in IP networks where the life-time of certain flows is shorter than the RTT. As usually short life-time flows have low bandwidth requirements, a quick decision of accepting or rejecting them can be taken without altering the QoS of existing flows and may thus optimize the network resource utilization. This represents an advantage for control of real-time low-bandwidth flows, such as i.e. VoIP traffic. As for the big flows, they will be accepted throughout the network with a certain latency which, however, can be smaller than the latency achieved by the prior art admission control mechanisms.

In addition, prior art admission control schemes only accept or reject flows.

The technical problem to solve is thus to design an admission control scheme that limits or avoids explicit signaling between the end-users and the admission node/router in the network (i.e., a *priori knowledge* of the traffic characteristics) and per-hop explicit signaling between the ingress and egress nodes (i.e., end-to-end signaling).

The object of the invention is a method of controlling admission of traffic flows, in a data packet communication network comprising a plurality of nodes, comprising at reception of a new traffic flow candidate to be carried across the data packet communication network from an ingress node to an egress node, the steps of:
- determining if allocating an initial minimum given bandwidth amount Bₘ to said new traffic flow is possible without altering service quality of already existing traffic flows being carried by the data packet communication network, if yes
- allocating said minimum given bandwidth amount Bₘ to said new traffic flow, and
- carrying said new traffic flow across the data packet communication network using said currently allocated bandwidth B,
and in that it further comprises iterating over the following steps, according to needs of said new traffic flow:
- determining if allocating an incremental given bandwidth amount B_{Δ} to said new traffic flow is possible as a function of a state of the available resources of the data packet communication network, if yes
- allocating said incremental given bandwidth amount B_{Δ} to said new traffic flow, and
- carrying said new traffic flow across the data packet communication network using said currently allocated bandwidth B.

According to another feature of the invention, the incremental B_{Δ} bandwidth amount can be positive or negative.

According to another feature of the invention, the total bandwidth amount B allocated to said new traffic flow can not be more than a given maximum threshold B_{M}.

According to another feature of the invention, each node of the data packet communication network surveys the state of its available resources and broadcasts said state to border nodes, so that each border node can be aware of the state of the available resources of the data packet communication network for any path between itself and any egress node.

Others features, details and advantages of the invention will become more apparent from the detailed illustrating description given hereafter with respect to the drawings on which:
- figure 1 is a diagram illustrating a gradual allocation of bandwidth in function of time
- figure 2 is a schematic view of an ingress node that already admitted three traffic flows,
- figure 3 is a schematic view of the same ingress node while a fourth new traffic flow requests admission.

The method according to the invention takes place in a data packet communication network comprising a plurality of nodes. The method deals with the control of admission of traffic flows. At reception of a new traffic flow candidate to be carried across the data packet communication network from an ingress node to an egress node, said method has to determine if said new traffic flow can be admitted. Said method of controlling admission of traffic flows comprises a first step of determining if allocating an initial minimum given bandwidth amount Bₘ to said new traffic flow is possible without altering service quality of already existing traffic flows being carried by the data packet communication network. If the answer is determined to be yes, a second step proceeds to allocating said minimum given bandwidth amount Bₘ to said new traffic flow. A third step follows consisting in carrying said new traffic flow across the data packet communication network using said currently allocated bandwidth B, initially equal to said minimum given bandwidth amount Bₘ.

If the answer is no, the traffic flow is not admitted, no allocation is done, and the traffic flow may wait until another decision instant to retry admission.

Such a "partial" initial allocation allows for a quicker answer time and thus advantageously decreases the decision latency for the admission control procedure. In particular, low bandwidth flows can be immediately accepted into the network if some bandwidth is available. Consequently, short life-time and low-bandwidth flows are more quickly transported across the network.

After said initial allocation, if said new traffic flow still needs more bandwidth, the method further iterates through the following steps in order to gradually adapt the bandwidth currently allocated to said new traffic flow according to its current needs. A fourth step consists of determining if allocating an incremental given bandwidth amount B_{Δ} to said new traffic flow is possible as a function of a state of the available resources of the data packet communication network. If the answer is determined to be yes, then a fifth step consists in allocating said incremental given bandwidth amount B_{Δ} to said new traffic flow.

If the answer is no, the allocated bandwidth is left unchanged. The traffic flow may wait until another decision instant to have its bandwidth increased or decreased.

It may be noted however, that a decrease of bandwidth, if corresponding to the needs of the traffic flow, may generally be allowed, since it is always possible and not prejudicial to the state of the available resources of the data packet communication network. Accordingly, the traffic flow would have to wait until another decision instant to retry an increase of its allocated bandwidth.

In a sixth step, the traffic flow can be carried across the data packet communication network using said allocated bandwidth B, now equal to B = Bₘ+B_{Δ} (yes case) or B = Bₘ (no case).

Said gradually adapted allocation optimizes the usage of the network resources, in that it continuously adapts the access of a traffic flow to the network resources as a function of the state of the network resources, rather than taking admission decision based on peak-rate allocation, as is the case when admission decision is based on declared necessary bandwidth for a traffic flow.

Moreover, as the invention achieves a statistical Quality of Service, QoS, for end-users, it can work in tandem with the admission control schemes based on strict bandwidth reservation.

Therefore, it can also be implemented as a complementary solution to strict bandwidth reservation approaches.

It derives from the preceding that only border nodes are concerned with admission mechanism. Accordingly the method of the invention may advantageously be implemented at said border nodes that may be ingress nodes.

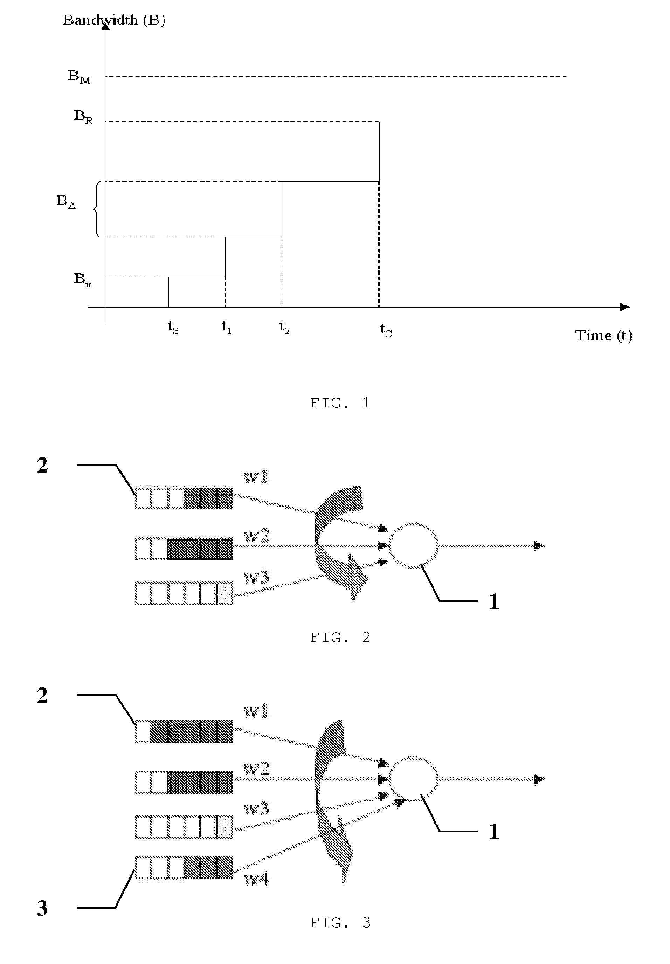

Now referring to figures 2 and 3, illustrating a first preferred embodiment, is presented a border node 1. A border node is, as opposed to a core node, a node disposed at the boundary of a network. Such a border node 1 may then be an ingress node 1 when it receives a traffic flow 3 candidate to be admitted in order to be carried through the network towards another node that thus becomes an egress node for said traffic flow 3.

At figure 2 the node 1 has already admitted three traffic flows 2. For each of these it has provided a given queue and a given weight w1, w2 and w3. Each weight is dynamically re calculated periodically.

At figure 3 a new fourth traffic flow 3 is candidate to be admitted. When admitted, said new traffic flow 3 is provided a queue and a initial weight w4. The weight is a mean to indicate the allocated bandwidth B. So according to the invention, w4 starts with a small value and is then gradually increased while the needs of said new traffic flow 3 are not satisfied, when the state of the resources of the network allows it, or maintained or even decreased when the needs of said new traffic flow 3 are satisfied.

Each time a new traffic flow arrives at the border or entry node or router, of the network, a queue/buffer and a service-rate is associated to the traffic flow. The buffer size and the service-rate guarantee that the accepted traffic flow will not alter the QoS of existing traffic flows.

The initial values of buffer size and service rate are computed based on local information about the resource state or can be based on the state of network resources between the entry/ingress and the exit/egress nodes.

In a second preferred embodiment, the gradual bandwidth allocation is controlled with token bucket schemes. In this case, each time a new flow is admitted to the network, an instance of a token bucket is allocated to said new flow. A minimum token buffer depth K and a minimum token rate R are associated to said new flow so that the admitted flow can not alter the performance of the existing flows. The value of K and R are derived from the state of the network resources and corresponds to the minimum bandwidth Bₘ allocated to each new incoming flow 3, as previously explained and illustrated with respect to first embodiment. Afterwards, K and R evolve as a function of the state of network resources and traffic characteristics, as previously explained with respect to first embodiment.

When a traffic flow remains inactive for a period of time, all the resources allocated to said flow, i.e. the weight and the buffer or token bucket instance, are released. The resources may then be re-allocated to another, new incoming, traffic flow.

Now referring to figure 1 is presented the gradual allocation of bandwidth B to a new traffic flow 3. The functioning is based on a dynamic scheduling. Figure 1 illustrates the evolution of the bandwidth B granted to a new accepted flow 3 as a function of time. At time tₛ, when the new traffic flows 3 arrives and is admitted, an initial minimum bandwidth Bₘ is allocated to said admitted traffic flow 3. Afterwards, the traffic flow 3 may be granted a higher amount of bandwidth if the traffic flow bandwidth is still higher or if it changes. E.g. at instant t₁, a new dynamic estimation of the needs vs. the state of resources of the network is done and determines that an incremental bandwidth amount B_{Δ1} can be allocated to said traffic flow 3. The total current bandwidth B of said traffic flow then becomes equal to B = Bₘ + B_{Δ1}.

Again, at instant t₂, a new incremental bandwidth amount B_{Δ2} is determined and allocated and the total current bandwidth B of said traffic flow 3 then becomes equal to B = Bₘ + B_{Δ1} + B_{Δ2}.

In the previous example, the incremental bandwidth amounts B_{Δ} are positive. This corresponds to a case where the traffic flow needs are bigger than the allocated bandwidth. They can also be negative when the needs of the traffic flow are determined to be satisfied.

Between two successive instants tᵢ, the traffic flow is carried over the network using the currently allocated bandwidth B.

The decision rate of adapting the bandwidth granted to a new traffic flow 3 depends on the updating/refreshing rate of the information about the state of the network resources.

Therefore, as illustrated in Figure 1, the invention achieves a gradual access to the network resources for the new admitted traffic flow 3 and allow for a continuously tailored allocation of bandwidth ressources.

At each decision time tᵢ, an incremental amount B_{Δ}, may or may not be incrementally allocated, if the network resources permit so and if the traffic flow needs it.

After a convergence time t_{C}, the new admitted flow 3 may reach a steady state, in terms of bit-rate, and thus the bandwidth required by the flow may get stabilized around a value of bandwidth B_{R}. The value of bandwidth B_{R} corresponds to an average bit-rate of the flow.

The initial Bₘ or incremental B_{Δ} given bandwidth amount so allocated to a new traffic flow 3 may be determined as a function of a state of the available resources of the data packet communication network.

Alternately or combinatory, the initial Bₘ or incremental B_{Δ} given bandwidth amount so allocated to a new traffic flow 3 may be determined as a function of said new traffic flow characteristics.

Alternately, the initial Bₘ or incremental B_{Δ} given bandwidth amount so allocated to a new traffic flow 3 may be determined as constants.

According to a preferred embodiment, the total bandwidth amount B allocated to a traffic flow 3 can not be more than a given maximum threshold B_{M}. It can be noticed, as illustrated at figure 1, that the bandwidth B granted to each new admitted flow 3 is only gradually increased and never tops a maximum threshold B_{M}. An upper bound B_{M} to the granted bandwidth B is useful in preventing the new admitted traffic flow 3 from grabbing all the available bandwidth and is thus useful in protecting network from congestion.

It has been previously said that some determinations are done in function of the state of the available resources of the data packet communication network. Borders nodes, which are in charge of receiving the candidate traffic flows 3 must then be aware of said state.

According to a feature of the invention, this is obtained by the following steps. Each node of the data packet communication network surveys the state of its available resources. Each said node then broadcasts its state to border nodes. So doing, each border node can be aware of the state of the available resources of the data packet communication network, in particular for any path between itself and any egress node. Since all nodes, included core nodes, broadcast their resources to all border nodes, any border node acting as an entry or ingress node for a new candidate traffic flow 3, knows the resources for each intermediate node between itself and the egress node of said traffic flow 3.

The border nodes need to have said state regularly updated, but not necessarily as often as in prior art solutions, where a signaling was done at each arrival of a traffic flow. The invention advantageously avoids explicit signaling between the end-user and network, and per-flow signaling between ingress and egress nodes. A lot less of signaling is thus necessary.

To guarantee regular update, said broadcasting may be periodical. The typical period may be determined either by a priori knowledge of the mean frequency of arrival of the traffic flows 3 or by trials and errors.

Said broadcasting may either be on-demand, a given border node asking it when it considers that its knowledge of said state is too old.

Said broadcast may either be asynchronous.

The proposed solution is very interesting in that it allows autonomous and self-organizing network, with respect to traffic flow admission control. The features of the invention greatly help and alleviate the issue of the network management. The invention transforms today's network management into an autonomic management. It opens the way to the design of admission control schemes that do not require signaling between end-user and the network and per-flow signaling within the network.

## Claims

1. A method of controlling admission of traffic flows, in a data packet communication network comprising a plurality of nodes, **characterized in that** it comprises at reception of a new traffic flow (3) candidate to be carried across the data packet communication network from an ingress node (1) to an egress node, the steps of:
- determining if allocating an initial minimum given bandwidth amount Bₘ to said new traffic flow is possible without altering service quality of already existing traffic flows (2) being carried by the data packet communication network, if yes
- allocating said minimum given bandwidth amount Bₘ to said new traffic flow (3), and
- carrying said new traffic flow (3) across the data packet communication network using said currently allocated bandwidth B,
and **in that** it further comprises iterating over the following steps, according to needs of said new traffic flow (3):
- determining if allocating an incremental given bandwidth amount B_{Δ} to said new traffic flow (3) is possible as a function of a state of the available resources of the data packet communication network, if yes
- allocating said incremental given bandwidth amount B_{Δ} to said new traffic flow (3), and
- carrying said new traffic flow (3) across the data packet communication network using said currently allocated bandwidth B.

2. The method of claim 1, wherein the incremental B_{Δ} bandwidth amount can be positive or negative.

3. The method of claim 2, wherein the initial Bₘ or incremental B_{Δ} given bandwidth amount allocated to said new traffic flow (3) are determined as a function of a state of the available resources of the data packet communication network.

4. The method of claim 2 or 3, wherein the initial Bₘ or incremental B_{Δ} given bandwidth amount allocated to said new traffic flow (3) are determined as a function of said new traffic flow characteristics.

5. The method of claim 2, wherein the initial Bₘ or incremental B_{Δ} given bandwidth amount allocated to said new traffic flow (3) are constants.

6. The method of any one of claims 1 to 5, wherein the total bandwidth amount B allocated to said new traffic flow (3) can not be more than a given maximum threshold B_{M}.

7. The method of any one of claims 1 to 6, wherein each node of the data packet communication network surveys the state of its available resources and broadcasts said state to border nodes (1), so that each border node (1) can be aware of the state of the available resources of the data packet communication network for any path between itself and any egress node.

8. The method of claim 7, wherein said broadcasting is periodical, on-demand or asynchronous.
